Europäisches Patentamt

European Patent Office

Office européen des brevets

(11) Veröffentlichungsnummer: **0 333 892**
**A1**

## (12) EUROPÄISCHE PATENTANMELDUNG

(21) Anmeldenummer: **88104494.5**

(22) Anmeldetag: **21.03.88**

(51) Int. Cl.⁴: **C02F 1/48 , C12C 5/00**

(43) Veröffentlichungstag der Anmeldung:
**27.09.89 Patentblatt 89/39**

(84) Benannte Vertragsstaaten:
**AT CH ES FR IT LI**

(71) Anmelder: **Bossert, Gerdi**
**Rudolf-Diesel-Strasse 5**
**D-7730 VS-Villingen(DE)**

(72) Erfinder: **Der Erfinder hat auf seine Nennung**
**verzichtet**

(74) Vertreter: **Liska, Horst, Dr. et al**
**Patentanwälte H. Weickmann, Dr. K. Fincke,**
**F.A. Weickmann, B. Huber, Dr. H. Liska, Dr. J.**
**Prechtel Möhlstrasse 22 Postfach 86 08 20**
**D-8000 München 86(DE)**

(54) **Gerät zur magnetischen Aufbereitung von Flüssigkeiten.**

(57) Das Gerät zur magnetischen Aufbereitung von Flüssigkeiten umfaßt eine elektromagnetische Ringspule (45) und eine die Ringspule (45) zwischen zwei zueinander koaxialen Polrohren (31, 33) aus magnetisierbarem Material einschließenden Gehäuse, bei welchem die Polrohre (31, 33) auf einer Seite der Ringspule (45) über eine Jochwand (35) aus magnetisierbarem Material miteinander verbunden sind und auf der gegenüberliegenden Seite der Ringspule (45) eine ringförmige, zur Ringspule (45) gleichachsige Durchflußkammer (47) begrenzen, welche im Abstand voneinander eine Zuflußöffnung (49) und eine Abflußöffnung (53) für die Flüssigkeit aufweist. Die Durchflußkammer (47) ist zur Ringspule (45) durch ein Kunststoff-Ringteil (55) flüssigkeitsdicht abgeschlossen. Die Durchflußkammer (47) ist im wesentlichen axial seitlich der Ringspule (45) angeordnet. In die Durchflußkammer (47) können Verwirbelungs- oder Labyrinthelemente (63) ragen.

FIG.1

## Gerät zur magnetischen Aufbereitung von Flüssigkeiten

Die Erfindung betrifft ein Gerät zur magnetischen Aufbereitung von Flüssigkeiten, insbesondere von Wasser, mit einer elektromagnetischen Ringspule, mit einem die Ringspule zwischen zwei im Abstand voneinander angeordneten Polwänden aus magnetisierbarem Material einschließenden Gehäuse, bei welchem die Polwände auf einer Seite der Ringspule über eine Jochwand aus magnetisierbarem Material miteinander verbunden sind und auf der gegenüberliegenden Seite der Ringspule eine ringförmige, zur Ringspule gleichachsige Durchflußkammer begrenzen, welche im Abstand voneinander eine Zuflußöffnung und eine Abflußöffnung für die Flüssigkeit aufweist und mit einem die Durchflußkammer zur Ringspule hin flüssigkeitsdicht abschließenden Ringteil aus nichtmagnetischem Material.

Ein Wasseraufbereitungsgerät dieser Art ist aus dem deutschen Gebrauchsmuster 84 22 660 bekannt und dient zur Beseitigung und Verhütung von Kesselstein und ähnlichen Ablagerungen in von Wasser durchströmten Rohrsystemen. Die beiden Polwände des bekannten Geräts sind als Ringscheiben ausgebildet, die eine zentrische, von der Ringspule koaxial umschlossene Durchflußkammer zwischen sich einschließen. Die Ringscheiben haben eine zentrische Zuflußöffnung bzw. Abflußöffnung. In der Durchflußkammer ist zur Verlängerung des Durchflußwegs des Wassers eine vom Wasser radial umströmte Prallplatte angeordnet. Bei dem bekannten Gerät ist die Durchflußkammer von der Ringspule durch ringförmige Ansätze getrennt, die an den Ringscheiben einstückig angeformt sind und über einen Dichtring stirnseitig aneinander anliegen.

Es ist Aufgabe der Erfindung, einen Weg zu zeigen, wie bei einem Flüssigkeitsaufbereitungsgerät der vorstehend erläuterten Art das Magnetfeld, welchem die Flüssigkeit in der Durchflußkammer aufgesetzt wird, mit verhältnismäßig geringem konstruktiven Aufwand verstärkt werden kann.

Im Rahmen der Erfindung sind die Polwände als koaxial ineinander angeordnete, zur Spulenachse gleichachsige Polrohre ausgebildet, die im Bereich ihres einen Endes über ein quer zur Rohrachse verlaufendes Jochteil miteinander verbunden sind und an ihrem anderen Ende mit axialem Abstand voneinander Stirndeckel tragen. Das Ringteil besteht im wesentlichen aus einer quer zur Rohrachse angeordneten, das innere Polrohr zwischen dessen Stirndeckel und der Ringspule umschließenden Ringscheibe. In dieser Ausgestaltung läßt sich ein verhältnismäßig kleiner Außendurchmesser des Geräts erreichen, da die zwischen den beiden Polrohren gebildete Durchflußkammer axial seitlich der Ringspule angeordnet ist.

Zur Abteilung der ringförmigen Durchflußkammer von der Ringspule wird ein aus Kunststoff bestehender Ringteil benutzt, der sich im wesentlichen über den gesamten gegenseitigen Abstand der Polrohre, gemessen in der an das Ringteil anschließenden Durchflußkammer, erstreckt. Auf diese Weise wird ein magnetischer Kurzschluß zwischen der Ringspule und den die Durchflußkammer begrenzenden Bereichen der Polrohre vermieden und eine beträchtliche Erhöhung der für die Aufbereitungswirkung verantwortlichen Magnetfeldstärke in der Durchflußkammer erreicht. Hierzu trägt auch bei, daß der Durchmesser der Ringspule und damit die Windungslänge der Ringspule verhältnismäßig klein gehalten werden kann.

Wenngleich sowohl die Zuflußöffnung und die Abflußöffnung durch das äußere Polrohr bzw. dessen Stirndeckel geführt sein kann, ist doch bevorzugt, eine dieser Öffnungen durch radiale Löcher des inneren Polrohrs zu bilden. Auf diese Weise läßt sich eine symmetrische Strömung in der Durchflußkammer erreichen.

Die Durchflußwege können gegebenenfalls durch in der Durchflußkammer angeordnete Labyrinthwände verlängert werden. Es hat sich auch gezeigt, daß in der Durchflußkammer angeordnete Verwirbelungskörper, die für eine wirbelnde Umwälzung der durch die Durchflußkammer strömenden Flüssigkeit sorgen, von Vorteil sind. Bei den Verwirbelungskörpern kann es sich um Lochplatten oder koaxiale, gelochte Rohre handeln, die von der Flüssigkeit durchströmt werden, oder aber um Stäbe oder dergleichen, die axial oder vorzugsweise radial in die Durchflußkammer hineinreichen. Soweit die Stäbe aus magnetisierbarem Material bestehen, ist ihre Länge oder ihr gegenseitiger Abstand so gewählt, daß keine magnetischen Kurzschlüsse entstehen. Die Stäbe können an einem oder an beiden die Polrohren oder einer der Labyrinthwände vorgesehen sein.

Die erfindungsgemäßen Aufbereitungsgeräte eignen sich nicht nur zur Verhinderung und zum Abbau von Kalkansatz in wasserführenden Systemen, sondern können auch für andere Zwecke eingesetzt werden, insbesondere für die Homogenisierung von Flüssigkeiten, speziell in der Nahrungsmittelindustrie. So hat sich herausgestellt, daß das Aufbereitungsgerät die Kristallisation in zuckerhaltigen Flüssigkeiten verhindert. Wird eine zu vergärende Flüssigkeit vor dem Gärprozeß mit dem Aufbereitungsgerät behandelt, so läßt sich eine höhere Alkoholkonzentration erreichen. Bei Bier wird eine bessere Schaumhaltigkeit erreicht, insbesondere dann, wenn das zum Brauen verwendete Wasser vorab mit dem Gerät aufbereitet wurde. In dem gebrauten Bier kommen die Bitterstoffe kräftiger zur Wirkung, und schließlich lassen sich Rückstände in Leitungen der Brauanlage verringern bzw. abbauen. Bei der Bereitung von Kaffee oder Tee mit aufbereitetem Wasser läßt sich eine deutliche Geschmacksverbesserung erzielen.

Im folgenden werden Ausführungsbeispiele der Erfindung anhand von Zeichnungen näher erläutert. Es zeigt:

Fig. 1 einen Axiallängsschnitt durch ein im wesentlichen rohrförmiges Gerät zur Flüssigkeitsaufbereitung und

Fig. 2 eine Variante des Geräts aus Fig. 1.

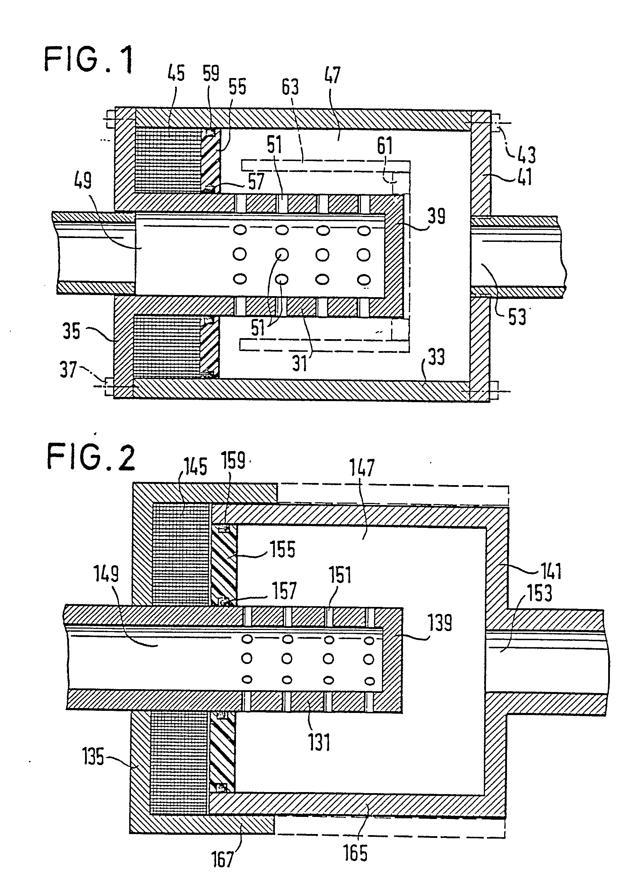

Fig. 1 zeigt ein Gerät zur Aufbereitung einer Flüssigkeit, insbesondere zur kalkansatzverhindernden Aufbereitung von Wasser mit zwei koaxial ineinander angeordneten Polrohren 31, 33 aus Weicheisen, die an ihrem einen Ende durch eine ebenfalls aus Weicheisen bestehende, ringförmige Jochscheibe 35 im wesentlichen luftspaltfrei miteinander verbunden sind. Die Jochscheibe 35 ist an ihrem Innenumfang einstückig mit dem inneren Polrohr 31 verbunden, beispielsweise angeschweißt und im Bereich ihres Außenumfangs mit Schrauben 37 axial lösbar an dem äußeren Polrohr 33 befestigt. Die der Jochscheibe 35 axial gegenüberliegenden Enden der Polrohre 31, 33 sind durch Stirndeckel 39, 41 verschlossen. Der Stirndeckel 41 besteht, ebenso wie der Stirndeckel 39, zweckmäßigerweise aus Weicheisen und ist mittels Schrauben 43 axial abnehmbar an dem äußeren Polrohr 33 befestigt.

Die Polrohre 31, 33 verlaufen mit radialem Abstand voneinander und schließen radial zwischen sich eine im Bereich der Jochscheibe 35 angeordnete elektrische Ringspule 45 ein. Die Ringspule 45 ist zwischen den Polrohren 31, 33 und der Jochscheibe 35 elektrisch isolierend vergossen.

Axial seitlich der Ringspule 45 begrenzen die Polrohre 31, 33 eine Durchflußkammer 47, die sich zwischen die mit axialem Abstand voneinander verlaufenden Stirndeckel 39, 41 hinein erstreckt. Das innere Polrohr 31 bildet einen Zuleitungskanal 49 für das magnetisch aufzubereitende Wasser, der über eine Vielzahl radialer Löcher 51 im Mantel des inneren Polrohrs 31 mit der Durchflußkammer 47 in Verbindung steht. Eine Abflußöffnung 53 für das aufbereitete Wasser ist zentrisch in dem das äußere Polrohr 33 verschließenden Stirndeckel 41 vorgesehen. Die Ringspule 45 ist von der Durchflußkammer 47 durch eine das innere Polrohr 31 umschließende Ringscheibe 55 abgetrennt, die durch Umfangsdichtungen 57, 59 zu den Mantelflächen der Polrohre 31, 33 abgedichtet ist. Die Ringscheibe 55 besteht aus Kunststoff und erstreckt sich über den gesamten radialen Abstand der Polrohre 31, 33, gemessen auf der Seite der Durchflußkammer 47. Im dargestellten Ausführungsbeispiel haben die Polrohre 31, 33 kreiszylindrische Mantelflächen, an welchen die Umfangsflächen der Ringscheibe 55 anliegt. Bei der Ringscheibe 55 kann es sich um ein gesondertes Bauteil handeln, oder aber um eine ringscheibenförmige Schicht der die Ringspule 45 flüssigkeitsdicht umgebenden Vergußmasse.

Die aufzubereitende Flüssigkeit tritt durch den Zuleitungskanal 49 über die Löcher 51 in die Durchflußkammer 47 ein, in der es das im Überlappungsbereich der Polrohre 31, 33 radial verlaufende Magnetfeld durchströmt, bevor es nach Durchlaufen des zwischen den Stirndeckeln 39, 41 mit axialer Komponente gerichteten Magnetfelds über die Abflußöffnung 53 aufbereitet abströmt. Um den Durchflußweg zu erhöhen, können über nichtmagnetische Abstandhalter 61 an einem der Polrohre, insbesondere dem inneren Polrohr 31, gehaltene rohrförmige, gleichachsig zu den Polrohren 31, 33 angeordnete Labyrinthwände 63 vorgesehen sein. Zusätzlich können verwirbelungsfördernde Maßnahmen, beispielsweise in Form von Verwirbelungskörpern, die in die Durchflußkammer 47 ragen, getroffen sein. Bei den Verwirbelungskörpern kann es sich beispielsweise um radiale, von einem oder beiden der Polrohre 31, 33 und/oder der Labyrinthwand 63 abstehende Stifte oder dergleichen, vorzugsweise aus einem nicht magnetischen Material, handeln. Da der Stirndeckel 41 abnehmbar an dem äußeren Polrohr 33 befestigt ist, kann die Durchflußkammer 47 beispielsweise zu Reinigungszwecken geöffnet werden.

Fig. 2 zeigt eine Variante des Geräts aus Fig. 1. Gleichwirkende Teile sind mit den Bezugszahlen aus Fig. 1 vermehrt um die Zahl 100 bezeichnet. Zur näheren Erläuterung des Aufbaus und der Wirkungsweise wird auf die Beschreibung der Fig. 1 Bezug genommen. Die Elemente 37, 43, 61, 63 aus Fig. 1 sind in Fig. 2 nicht dargestellt, können aber vorhanden sein.

Im Unterschied zum Gerät der Fig. 1 besteht das dem äußeren Polrohr 133 entsprechende Polrohr aus zwei mit engem Abstand ineinandergreifenden Polrohrabschnitten 165, 167. Der Polrohrabschnitt 165 hat kleineren Durchmesser und begrenzt zusammen mit seinem Stirndeckel 141 und dem aus Kunststoff bestehenden Ring 155 die Durchflußkammer 147. Der den Polrohrabschnitt 165 umschliessende Polrohrabschnitt 167 bildet zusammen mit der Ringspule 145 und der Jochscheibe 135 eine Einheit, die bei der Montage des Geräts axial auf das innere Polrohr 131 engsitzend aufgeschoben wird. Der Polrohrabschnitt 167 erstreckt sich lediglich über einen Teil der axialen Länge des Polrohrabschnitts 165, kann jedoch den Polrohrabschnitt 165, wie dies gestrichelt eingezeichnet ist, über seine gesamte Länge überlappen. Die Ausgestaltung der Fig. 2 erlaubt es, die wasserführenden Elemente gesondert von den elektrischen Komponenten vorzumontieren.

Es versteht sich, daß mehrere der Geräte zur Verstärkung der Aufbereitungswirkung in Wasserdurchflußrichtung hintereinander geschaltet, beispielsweise aneinander angeflanscht, werden können.

Die vorstehend erläuterten Varianten des Aufbereitungsgeräts lassen sich jedoch nicht nur zur Kalkansatzverhinderung in wasserführenden Geräten, sondern auch in der Nahrungsmittelindustrie, insbesondere für die Homogenisierung oder Geschmacksverbesserung von Flüssigkeiten einsetzen. Beispielsweise läßt sich durch Behandlung zuckerhaltiger Flüssigkeiten die Kristallisationsneigung des Zuckeranteils mindern oder verhindern. Durch Behandlung zu vergärender Flüssigkeiten läßt sich die zu erzielende Alkoholkonzentration erhöhen. Insbesondere von Vorteil ist die Erfindung im Bierbrauwesen. Es läßt sich eine bessere Schaumhaltigkeit des Biers und eine Erhöhung des Bittergeschmacks erzielen. Speziell lassen sich Rückstände im Leitungssystem der Brauerei vermindern bzw. verhüten. Die Bereitung von Kaffee oder Tee aus aufbereitetem Wasser führt zu einer deutlichen Geschmacksverbesserung.

**Ansprüche**

1. Gerät zur magnetischen Aufbereitung von Flüssigkeiten, insbesondere von Wasser,
mit einer elektromagnetischen Ringspule (45; 145),
mit einem die Ringspule (45; 145) zwischen zwei im Abstand voneinander angeordneten Polwänden (31, 33; 131, 165, 167) aus magnetisierbarem Material einschließenden Gehäuse, bei welchem die Polwände (31, 33; 131, 165, 167) auf einer Seite der Ringspule (45; 145) über eine Jochwand (35; 135) aus magnetisierbarem Material miteinander verbunden sind und auf der gegenüberliegenden Seite der Ringspule (45; 145) eine ringförmige, zur Ringspule (45; 145) gleichachsige Durchflußkammer (47; 147) begrenzen, welche im Abstand voneinander eine Zuflußöffnung (51; 151) und eine Abflußöffnung (53; 153) für die Flüssigkeit aufweist, und mit einem die Durchflußkammer (11; 47; 147) zur Ringspule (45; 145) hin flüssigkeitsdicht abschliessenden Ringteil (55; 155) aus nichtmagnetischem Material,
**dadurch gekennzeichnet,** daß die Polwände als koaxial ineinander angeordnete, zur Spulenachse gleichachsige Polrohre (31, 33; 131, 165, 167) ausgebildet sind, die im Bereich ihres einen Endes über ein quer zur Rohrachse verlaufendes Jochteil (35; 135) miteinander verbunden und an ihrem anderen Ende mit axialem Abstand voneinander Stirndeckel (39, 41; 139, 141) tragen, daß die Ringspule (45; 145) radial zwischen den Polrohren (31, 33; 131, 165, 167) angeordnet ist und daß das Ringteil eine quer zur Rohrachse angeordnete, das innere Polrohr (31; 131) zwischen dessen Stirndeckel (39; 139) und der Ringspule (45; 145) umschließende Ringscheibe (55; 155) umfaßt, aus Kunststoff besteht und sich im wesentlichen über den gesamten radialen Abstand der Polrohre (31, 33; 131, 165, 167), gemessen in der an das Ringteil (55; 155) anschließenden Durchflußkammer (47; 147), erstreckt.

2. Gerät nach Anspruch 1, dadurch gekennzeichnet, daß die Zuflußöffnung (51; 151) und die Abflußöffnung (53; 153) durch radiale Löcher (51; 151) des inneren Polrohrs (31; 131) und ein zentrisches Loch (53; 153) des das äußere Polrohr (33; 165, 167) verschließenden Stirndeckels (41; 141) gebildet sind.

3. Gerät nach Anspruch 1 oder 2, dadurch gekennzeichnet, daß die Polrohre (31, 33; 131, 165, 167) als Kreiszylinderrohre und das Jochteil (35; 135) sowie das Ringteil (55; 155) als Ringscheiben ausgebildet sind.

4. Gerät nach einem der Ansprüche 1 bis 3, dadurch gekennzeichnet, daß das äußere Polrohr aus zwei axial lösbar verbundenen Rohrabschnitten (165, 167) besteht, von denen der eine Rohrabschnitt (165) an seinem einen Ende mit dem Stirndeckel (141) und an seinem anderen Ende mit dem Ringteil (55) verbunden ist und von denen der andere Rohrabschnitt (167) mit dem Jochteil (135) verbunden ist.

5. Gerät nach Anspruch 4, dadurch gekennzeichnet, daß das innere Polrohr (131) und der eine Rohrabschnitt (165) eine erste Einheit und der andere Rohrabschnitt (167) mit der Ringspule (145) eine zweite Einheit bilden.

6. Verwendung des Aufbereitungsgeräts gemäß wenigstens einem der Ansprüche 1 bis 5 zur Aufbereitung von zu Nahrungsmitteln zu verarbeitenden Flüssigkeiten.

FIG.1

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-U-8 625 367 (G. BOSSERT). <br> * Insgesamt * <br> ----- | 1-6 | C 02 F 1/48 <br> C 12 C 5/00 |
| | | | **RECHERCHIERTE SACHGEBIETE (Int. Cl.4)** |
| | | | C 02 F |

Der vorliegende Recherchenbericht wurde für alle Patentansprüche erstellt

| Recherchenort | Abschlußdatum der Recherche | Prüfer |
|---|---|---|
| DEN HAAG | 28-10-1988 | VAN AKOLEYEN H.T.M. |

EPO FORM 1503 03.82 (P0403)